# EUROPEAN PATENT APPLICATION

(11) **EP 4 782 720 A1**
(43) Date of publication of application: **29.07.2026**
(21) Application number: 24868112.4
(22) Date of filing: 02.09.2024
(51) Int. Cl.: F16H 25/24, F16H 25/20

(54) **ACTUATOR**

(30) Priority: 22.09.2023 JP 2023159095; 22.09.2023 JP 2023159096; 22.09.2023 JP 2023159097
(71) Applicant: Koito Manufacturing Co., Ltd., Shinagawa-ku, Tokyo 141-0001 (JP)
(72) Inventor: MOCHIZUKI, Yuya, Shizuoka-shi Shizuoka 424-8764 (JP)
(74) Representative: Algemeen Octrooi- en Merkenbureau B.V.
(86) International application number: PCT/JP2024/031465
(87) International publication number: WO 2025/063033

(57) **Abstract**

An actuator 17 includes: a case 24; a rod housed in the case 24, a tip of the rod protruding out of the case 24 from an opening 34c; a motor 28 housed in the case 24; and a moving mechanism 32 housed in the case 24 and driven by the motor 28 to move the rod 26 in an axial direction of the rod. The moving mechanism includes an annular member through which the rod 26 is inserted, the rod 26 has a male thread part 26g on an outer circumference, the annular member has a female thread part 42e on an inner circumference, the rod 26 moves in the axial direction according to rotation of the annular member, the case 24 has a restraining part 34d more toward the tip than the annular member in the axial direction, the rod 26 has a notch 26m extending in the axial direction in a part of a circumferential direction, and radial displacement of the rod 26 is restrained by contact of the notch 26m with the restraining part 34d.

## Description

### TECHNICAL FIELD

The present disclosure relates to an actuator.
(1) (2) Patent literature 1 discloses a vehicle lamp in which it is possible to perform aiming adjustment, which is initial adjustment of the misalignment of the optical axis of a lamp unit, and level adjustment, which is adjustment of the misalignment of the optical axis of the lamp unit that varies with the weight of a vehicle load. According to this vehicle lamp, the misalignment of the optical axis of the lamp unit can be adjusted.
(3) Patent literature 1 discloses an actuator for adjusting the misalignment of the optical axis of a lamp unit. This actuator is equipped with a case, a rod, and a moving mechanism. The moving mechanism includes an annular member through which the rod is inserted. The rod has a male thread part on the outer circumference, the annular member has a female thread part threadably mounted on the male thread part on the inner circumference, and the rod moves in the axial direction according to the rotation of the annular member.

### RELATED-ART LITERATURE

### PATENT LITERATURE

Patent literature 1: JP2019-123508

### SUMMARY OF INVENTION

### TECHNICAL PROBLEM

(1) The present disclosure is based on the background described above, and an illustrative purpose of an aspect thereof is to provide a technology to make it relatively easy to manufacture a structure for suppressing a large slip of the rod of an actuator.
(2) In patent literature 1, leveling adjustment is performed automatically by using an actuator, while aiming adjustment is performed by an operator manually rotating the aiming screw. There is a demand to perform aiming adjustment automatically using an actuator. In this case, the rod of the actuator must have a long stroke.
   The present disclosure addresses these issues, and an illustrative purpose of an aspect thereof is to provide an actuator in which a long stroke is realized.
(3) The present disclosure addresses these issues, and an illustrative purpose of an aspect thereof is to provide an actuator in which the undercut of the rod can be reduced or eliminated.

### SOLUTION TO PROBLEM

(1) An actuator according to an embodiment of the present disclosure includes: a case having an opening; a rod housed in the case, a tip of the rod protruding out of the case from the opening; a motor housed in the case; and a moving mechanism housed in the case and driven by the motor to move the rod in an axial direction of the rod. The moving mechanism includes an annular member through which the rod is inserted. Movement of the annular member in the axial direction is restrained, the rod has a male thread part on an outer circumference, the annular member has a female thread part threadably mounted on the male thread part on an inner circumference, and the rod moves in the axial direction according to rotation of the annular member, and the case has a restraining part more toward the tip than the annular member in the axial direction. The rod has a notch extending in the axial direction in a part of a circumferential direction, and radial displacement of the rod is restrained by contact of the notch with the restraining part.
(2) An actuator according to an embodiment of the present disclosure includes: a case having an opening; a rod housed in the case, a tip of the rod protruding out of the case from the opening; a motor housed in the case; and a moving mechanism housed in the case and driven by the motor to move the rod in an axial direction of the rod. The moving mechanism includes an annular member through which the rod is inserted. Movement of the annular member in the axial direction is restrained, the rod has a male thread part on an outer circumference, the annular member has a female thread part threadably mounted on the male thread part on an inner circumference, the rod moves in the axial direction according to rotation of the annular member, and a part of the male thread part is exposed from the annular member.
(3) An actuator according to an embodiment of the present disclosure includes: a case having an opening; a rod housed in the case, a tip of the rod protruding out of the case from the opening; a motor housed in the case; and a moving mechanism housed in the case and driven by the motor to move the rod in an axial direction of the rod. The moving mechanism includes an annular member through which the rod is inserted. Movement of the annular member in the axial direction is restrained, the rod has a male thread part on an outer circumference, the annular member has a female thread part threadably mounted on the male thread part on an inner circumference, the rod moves in the axial direction according to rotation of the annular member, and the rod is made of resin and has a notch extending in the axial direction in a part of the circumferential direction.

### ADVANTAGEOUS EFFECTS OF INVENTION

(1) An embodiment of the first aspect of the present disclosure can provide a technology to make it relatively easy to manufacture a structure for suppressing a large slip of the rod of an actuator. Or (2) an embodiment of the second aspect of the present disclosure can provide an actuator in which a long stroke is realized. Or (3) an embodiment of the third aspect of the present disclosure can provide an actuator in which the undercut of the rod can be reduced or eliminated.

### BRIEF DESCRIPTION OF DRAWINGS

[Fig. 1] Fig. 1 is a cross-sectional view of a vehicle lamp equipped with an actuator according to an embodiment.
[Fig. 2] Figs. 2A, 2B are side views illustrating an operation of the actuator of Fig. 1.
[Fig. 3] Fig. 3 is a perspective view of the actuator of Fig. 1.
[Fig. 4] Fig. 4 is a front view of the actuator of Fig. 1.
[Fig. 5] Fig. 5 is a side view of the actuator of Fig. 1.
[Fig. 6] Fig. 6 is a side view of the actuator of Fig. 1.
[Fig. 7] Fig. 7 is an enlarged view of the cylindrical protrusion of Fig. 1 and a neighborhood thereof.
[Fig. 8] Fig. 8 is a perspective view of the actuator of Fig. 1.
[Fig. 9] Fig. 9 is a perspective cross-sectional view of the actuator of Fig. 1.
[Fig. 10] Fig. 10 is a perspective view of the actuator of Fig. 1.
[Fig. 11] Fig. 11 is a side view of the actuator according to the second embodiment.
[Fig. 12] Fig. 12 is a perspective view of the actuator of Fig. 11.
[Fig. 13] Fig. 13 is an enlarged perspective view of the cylindrical protrusion of the actuator of Fig. 11 and a neighborhood thereof.
[Fig. 14] Fig. 14 is a cross-sectional view of the actuator of Fig. 11.
[Fig. 15] Fig. 15 is a side view of the rod of Fig. 11.
[Fig. 16] Fig. 16 is a perspective view of the rod of Fig. 11.
[Fig. 17] Fig. 17 is a perspective cross-sectional view of the rod of Fig. 11.

### DESCRIPTION OF EMBODIMENTS

Hereinafter, the invention will be described based on preferred embodiments with reference to drawings. The embodiments do not limit the scope of the invention but exemplify the invention. Not all of the features and the combinations thereof described in the embodiments are necessarily essential to the invention. Identical or like constituting elements, members, processes shown in the drawings are represented by identical symbols and a duplicate description will be omitted as appropriate.

### (First embodiment)

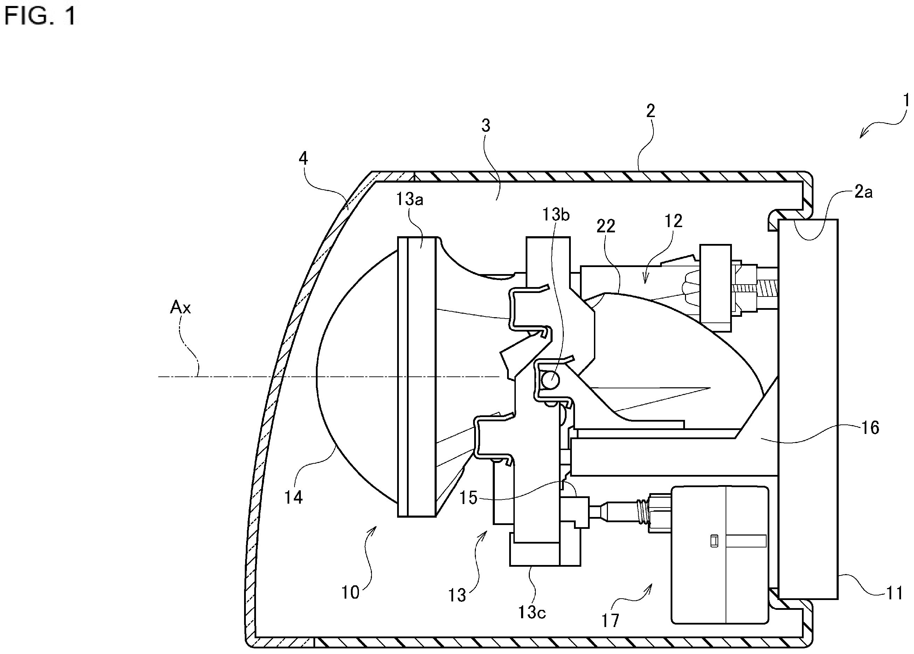

Reference is made to Fig. 1. A vehicle lamp 1 is the headlight of a vehicle. The vehicle lamp 1 is arranged on the left and right sides of the front part of the vehicle body, respectively. The two vehicle lamps 1 arranged on the left and right sides are configured to be substantially identical.

The vehicle lamp 1 is equipped with a lamp body 2 having an opening on the front side of the lamp, a translucent outer cover 4 attached to the lamp body 2 to cover the opening of the lamp body 2, and a lamp unit 10 provided in a lamp chamber 3 formed by the lamp body 2 and the outer cover 4.

The lamp unit 10 includes a heat sink 11, a light source unit 12, a lens holder 13, a projection lens 14, a support member 16, and an actuator 17.

The heat sink 11 fits into an opening 2a formed on the back surface of the lamp body 2. The heat sink 11 is exposed outside through the opening 2a.

The support member 16 is fixed to heat sink 11. The support member 16 can be considered as a part of the heat sink 11. The support member 16 may be fixed to the lamp body 2.

The light source unit 12 includes a light source (not shown) and a reflector 22. The light source is arranged inside the reflector 22 so as to be opposite to the reflecting surface (not shown) of the reflector 22. The reflector 22 and the light source are fixed to the support member 16.

The projection lens 14 is a plano-convex aspherical lens, the surface thereof on the front side of the lamp being convex, and the surface on the back side of the lamp being planar. The light emitted from the light source is reflected by the reflecting surface of the reflector 22 toward the front side of the lamp, and at least portion of the light passes through the projection lens 14. The light passing through the projection lens 14 illuminates a scene in front of the lamp through the outer cover 4.

The lens holder 13 is arranged on the front side of the lamp with respect to the reflector 22. The lens holder 13 includes a lens holding part 13a. The lens holding part 13a is an annular frame, and the projection lens 14 is fixed on the front surface of the lens holding part 13a. A joint member 15 is fixed to a lower part 13c of the lens holder 13.

The actuator 17 is a mechanism for performing both aiming adjustment, which is the initial adjustment of the misalignment of the optical axis of the lamp unit 10, and leveling adjustment, which is adjustment of the misalignment of the optical axis of the lamp unit 10 that varies with the weight of the vehicle load. The actuator 17 is located on the back side of the lamp with respect to the lens holder 13 and is arranged below the support member 16.

The actuator 17 is equipped with a case 24 and a rod 26. The actuator 17 is arranged such that the tip of the rod 26 faces the front side of the lamp and the rod 26 extends backward in the longitudinal direction of the lamp. The tip of the rod 26 is connected to the joint member 15. A drive circuit (not shown) provided in the case 24 receives a control signal from a control unit (not shown) provided outside the lamp unit 10. The rod 26 moves in the longitudinal direction of the lamp relative to the case 24 and, ultimately, the lamp body 2 according to the control signal.

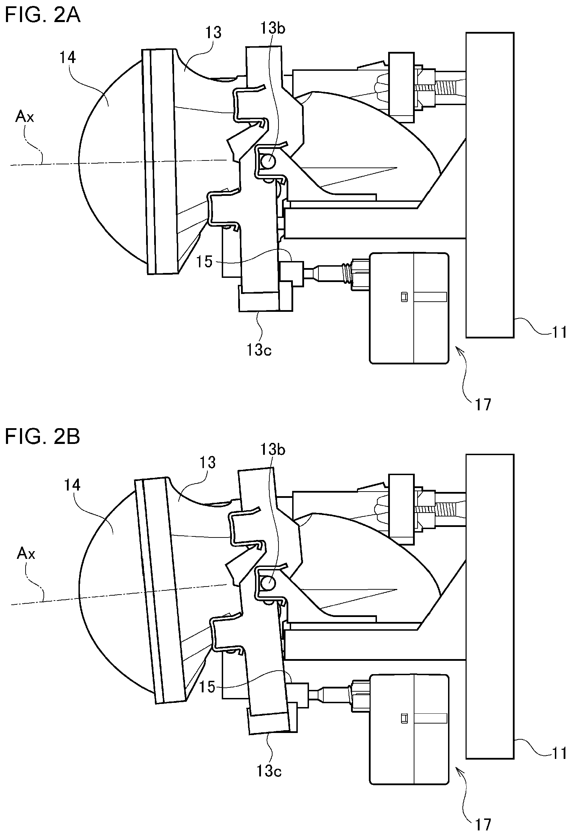

Reference is made to Fig. 2. Fig. 2B shows that the rod 26 is more toward the back side of the lamp than in Fig. 2A. The movement of the rod 26 from the position of Fig. 2A to the position of Fig. 2B, i.e., toward the back side of the lamp draws the lower part 13c of the lens holder 13 toward the back side of the lamp via the joint member 15, rotates the lens holder 13 and, ultimately, the projection lens 14 supported by the lens holder 13, around a support shaft 13b in the counterclockwise direction in Fig. 2, and tilts the optical axis Ax of the projection lens 14 downward.

The movement of the rod 26 from the position of Fig. 2B to the position of Fig. 2A, i.e., toward the front side of the lamp pushes the lower part 13c of the lens holder 13 toward the front side of the lamp via the joint member 15, rotates the lens holder 13 and, ultimately, the projection lens 14 supported by the lens holder 13, around the support shaft 13b in the clockwise direction in Fig. 2, and tilts the optical axis Ax of the projection lens 14 upward.

In other words, the optical axis Ax can be displaced in the vertical direction by moving the rod 26 of the actuator 17 in the longitudinal direction.

Described above is the overall configuration of the vehicle lamp 1. Details about the actuator 17 will now be described.

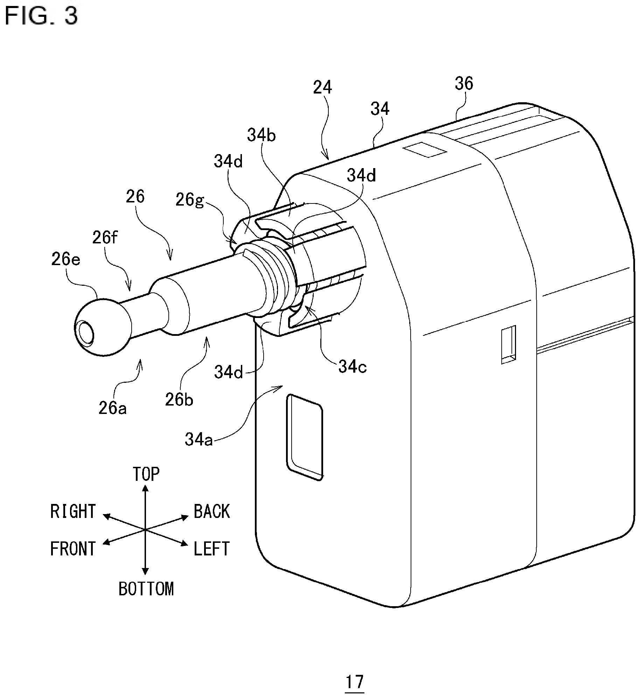

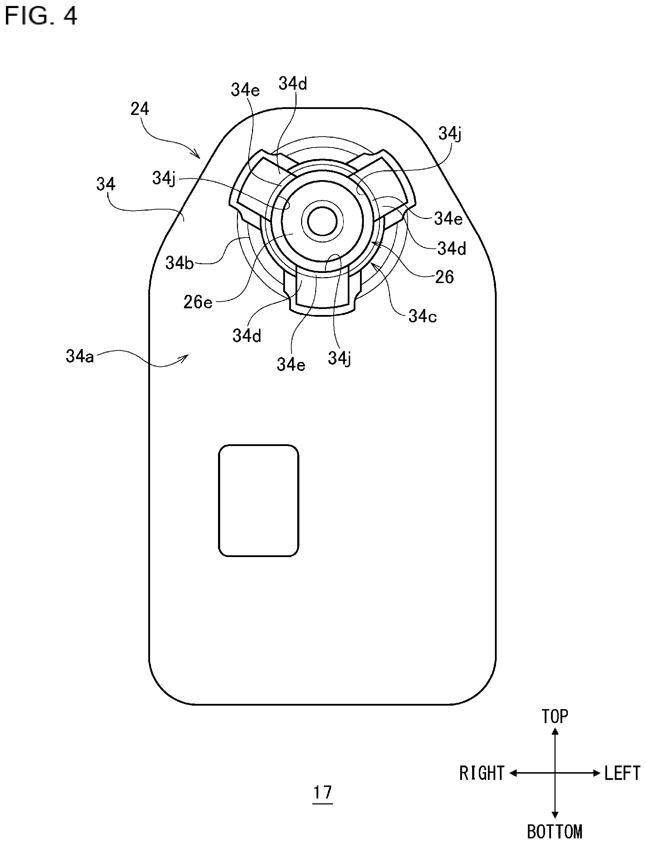

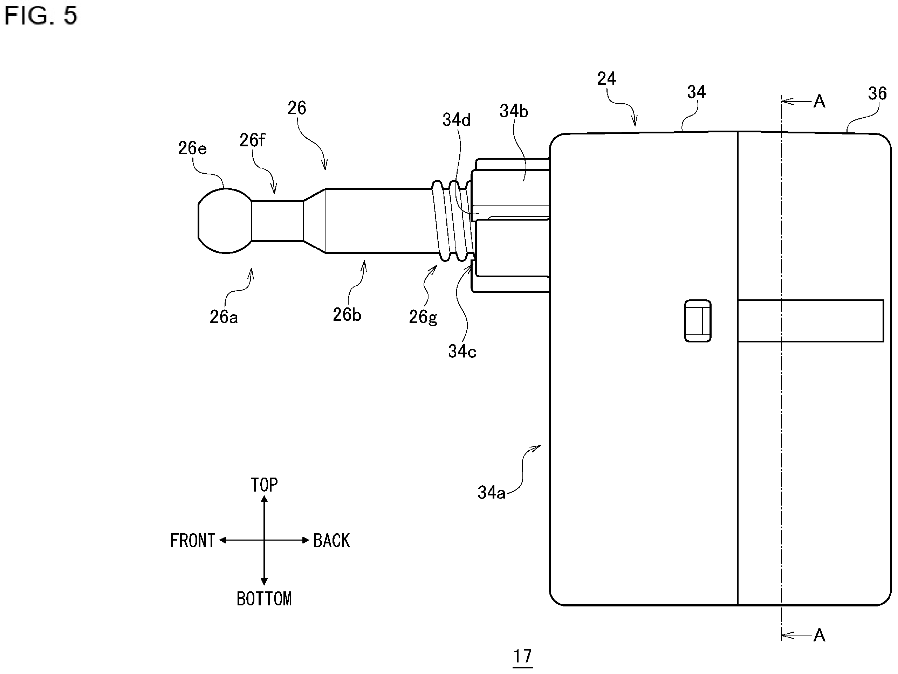

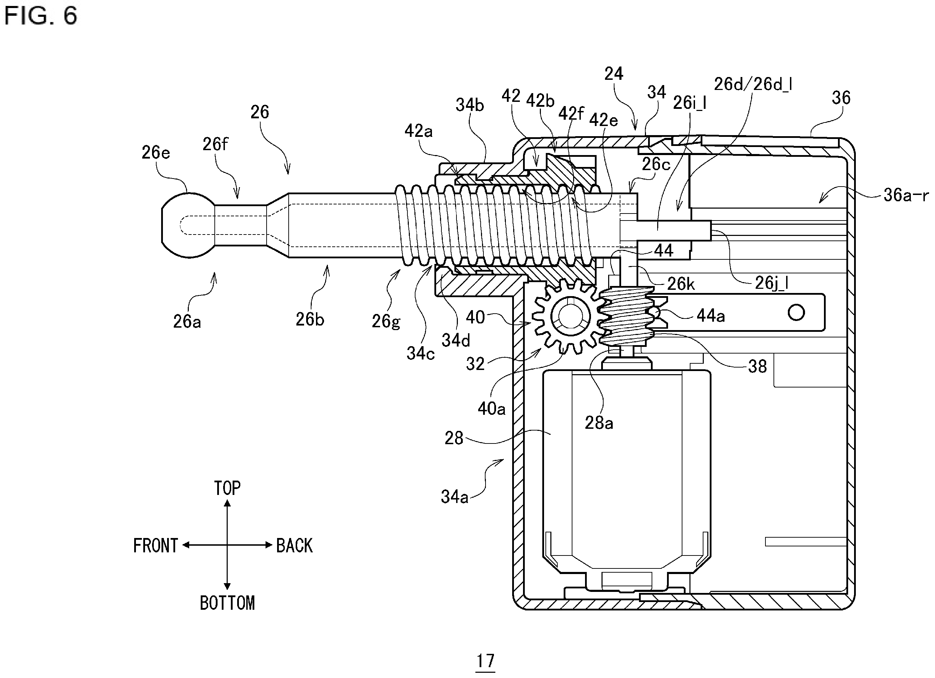

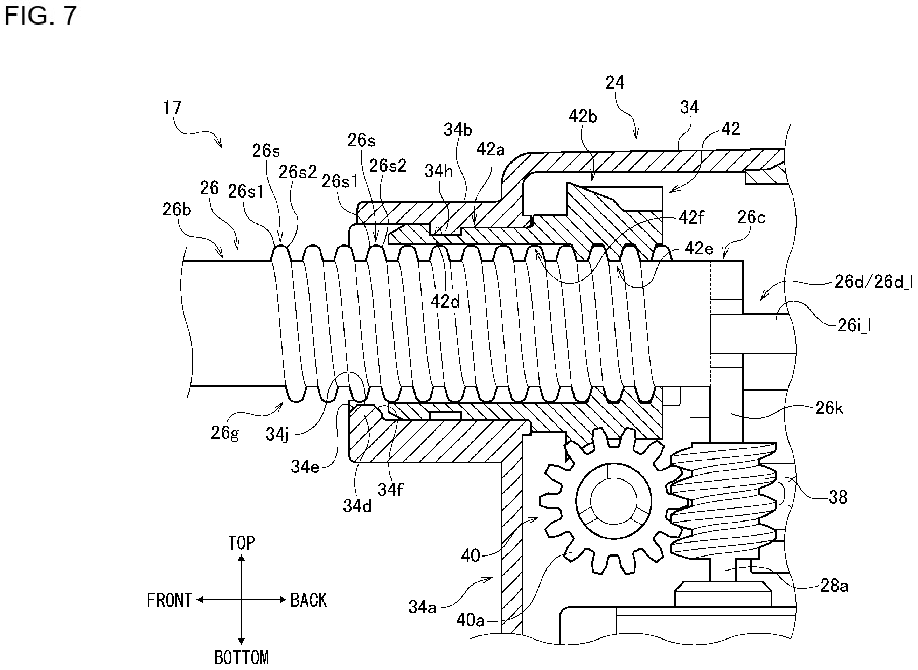

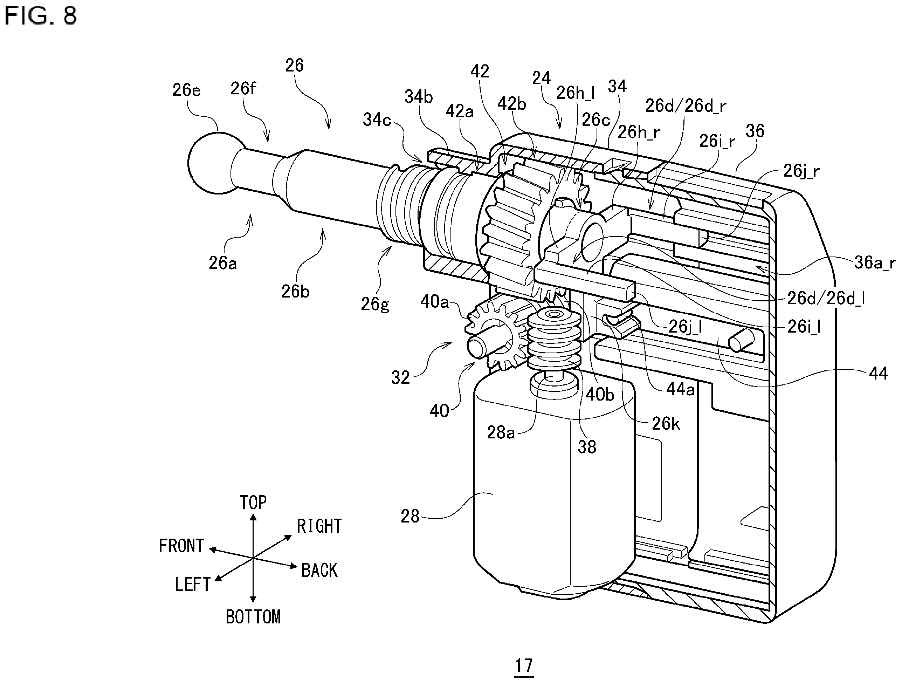

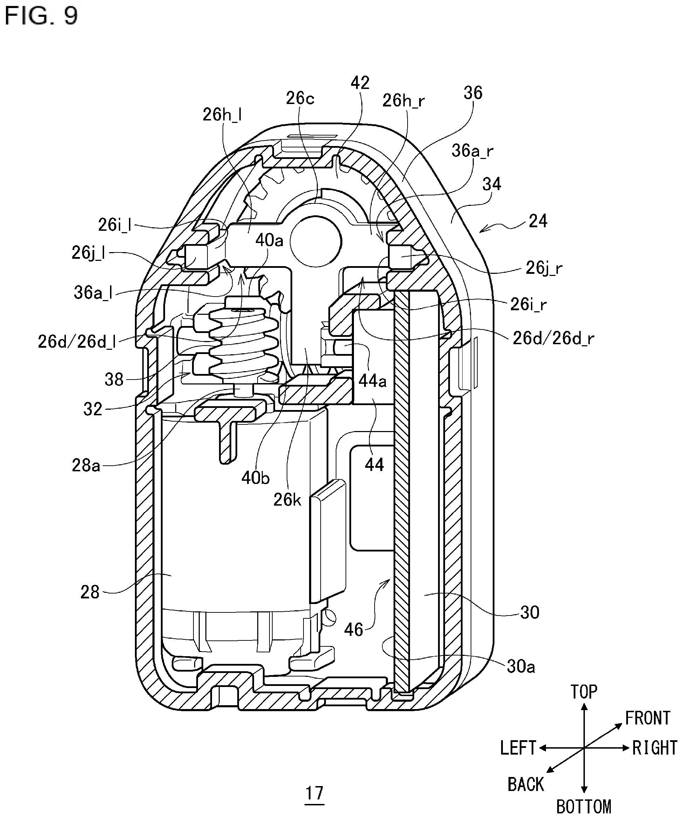

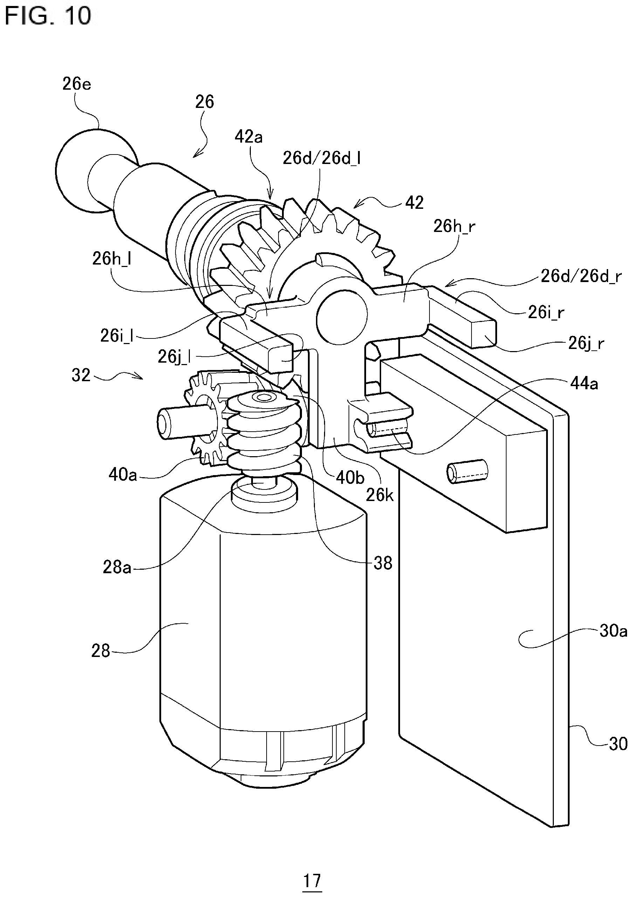

Reference is made to Figs. 3-10. Figs. 6 and 7 show cross-sections of the case 24 and a worm wheel 42. Fig. 8 shows a cross-section of the case 24. Fig. 9 is a cross-sectional view of the actuator 17 through the A-A line of Fig. 5. In Figs. 6-8, illustration a board 30 is omitted. In Fig. 10, illustration of the case 24 is omitted.

"Top", "bottom", "front", "back", "left", and "right" are defined as shown to illustrate the relative positions of the constituting elements, but the terms are for convenience of description only and do not limit the attitude in which the actuator 17 is used. The actuator 17 can be used in an arbitrary attitude.

Also, as described later, the longitudinal direction coincides with the direction of extension of the rod 26, and so the longitudinal direction will also be referred to as the axial direction. In addition, the circumferential direction of the circle centered on the axial direction of the rod 26 will be referred to as the circumferential direction, and the direction of the radius of the circle will be referred to as the radial direction.

The actuator 17 is equipped with the case 24, the rod 26, a motor 28, the board 30, and a moving mechanism 32. The case 24 is formed in a box shape. The rod 26, the motor 28, the board 30, and the moving mechanism 32 are housed in the case 24. A spherical part 26e at the tip of the rod 26 protrudes out of the case 24 from an opening 34c.

The case 24 includes a first case part 34 and a second case part 36. The second case part 36 is arranged behind the first case part 34. In other words, the first case part 34 and the second case part 36 are opposite to each other in the longitudinal direction. The first case part 34 and the second case part 36 are both made of resin and are formed by injection molding.

The first case part 34 is formed in the shape of a box with an open back surface. The second case part 36 is formed in the form of a box with an open front surface. The first case part 34 and the second case part 36 are connected so that the openings fit to each other.

The first case part 34 has a cylindrical protrusion 34b that protrudes forward in the upper part of its front surface 34a. An opening 34c is formed at the front end of the cylindrical protrusion 34b.

The cylindrical protrusion 34b has restraining part 34d. The restraining part 34d is radially opposite to the rod 26 across a small (e.g., about 0.5 mm) gap. The restraining part 34d has an inner circumferential surface 34j that represents a part of the cylindrical surface. When the rod 26 is displaced radially, the rod 26 comes into contact with the inner circumferential surface 34j of the restraining part 34d. In other words, the radial displacement of the rod 26 is restrained by the contact of the rod 26 with the inner circumferential surface 34j of the restraining part 34d. This suppresses a large slip of the rod 26.

The restraining part 34d may be formed intermittently in the circumferential direction as shown in the figure, or it may be formed continuously in the circumferential direction, i.e. in a ring shape. Edges 34e, 34f at the respective ends of the restraining part 34d in the longitudinal direction have a chamfered shape. A chamfered shape means a shape that looks like a sharp corner is cut off. The edges 34e, 34f at the respective ends may have a C chamfered shape as illustrated, an R chamfered shape, or any of other chamfered shapes. The chamfered shape may be realized by chamfering or pre-molding into that shape in injection molding.

The rod 26 is made of resin and is formed by injection molding. The rod 26 is formed to be hollow to prevent sink marks. The rod 26 includes a tip part 26a, a base part 26c, an intermediate part 26b located between the tip part 26a and the base part 26c, and two arms 26d extending backward from the outer circumferential surface of the base part 26c.

The tip part 26a includes a spherical part 26e provided at the tip and a constricted part 26f provided between the spherical part 26e and the intermediate part 26b. The spherical part 26e is rotatably gripped by the joint member 15. In other words, the spherical part 26e is always located outside the case 24.

The intermediate part 26b has a male thread part 26g threadably mounted on a female thread part 42e of a worm wheel 42 described below. The male thread part 26g is formed to be relatively long in the axial direction and is formed axially longer than the worm wheel 42 itself as well as the female thread part 42e of the worm wheel 42. Therefore, at least a part of the male thread part 26g in the axial direction is always exposed from the worm wheel 42 without being surrounded by the worm wheel 42. The front side of the male thread part 26g may protrude out of the case 24 from the opening 34c as shown in the figure. The male thread part 26g may be formed in the entirety of the intermediate part 26b in the axial direction.

Edges 26s1, 26s2 of a ridge part 26s of the male thread part 26g in the longitudinal direction have a chamfered shape. The edges 26s1, 26s2 at the respective ends may have an R chamfered shape as illustrated, a C chamfered shape, or any of other chamfered shapes.

The base part 26c is always located in the case 24. The base part 26c is not surrounded by the worm wheel 42 and is always located behind the worm wheel 42.

A left arm 26d_l is provided on the left side of the base part 26c. The left arm 26d_l includes a root part 26h_l overhanging leftward from the base part 26c and an extension part 26i_l extending backward from the root part 26h_l beyond the base part 26c. A back end 26j_l of the extension part 26i_l is always located in the second case part 36.

A right arm 26d_r is provided on the right side of the base part 26c. The right arm 26d_r includes a root part 26h_r overhanging rightward from the base part 26c and an extension part 26i_r extending backward from the root part 26h_r beyond the base part 26c. A back end 26j_r of the extension part 26i_r is always located in the second case part 36.

The extension parts 26i_l, 26i_r respectively engage with engagement parts 36a_l, 36a_r of the second case part 36 over the entire range of the stroke of the rod 26. This restrains the rotation of the rod 26. The engagement parts 36a_l, 36a_r may be longitudinally extending grooves formed on the left and right inner wall surfaces of the second case part 36, respectively. In this case, the extension parts 26i_l 26i_r slide in the grooves as the engagement parts 36a_l 36a_r, respectively. Back ends 26j_l, 26j_r of the extension parts 26i_l, 26i_r are located in the grooves as the engagement parts 36a_l, 36a_r over the entire range of the stroke of the rod 26. Meanwhile, the extension parts 26i_l, 26i_r do not engage or contact the first case part 34 over the entire range of the stroke of the rod 26.

The motor 28 is, for example, a DC motor. The motor 28 is held in the case 24 such that a rotation shaft 28a extends in the vertical direction, and the tip of the rotation shaft 28a is faces upwards. The motor 28 drives the moving mechanism 32 to move the rod 26 in its axial direction.

The moving mechanism 32 includes a worm 38, a transmission gear 40, and the worm wheel 42. The worm 38 is coaxially fixed to the rotation shaft 28a of the motor 28. In other words, the worm 38 is arranged in the case 24 such that the rotation shaft thereof extends in the vertical direction, and the worm 38 rotates integrally with the rotation shaft 28a of the motor 28.

The transmission gear 40 is rotatably supported by the case 24. The transmission gear 40 transmits the rotation of the worm 38, i.e., the rotation shaft 28a of the motor 28, to the worm wheel 42. To be specific, the transmission gear 40 has a worm wheel part 40a and a worm part 40b. The worm wheel part 40a and the worm part 40b are provided to be coaxial. The worm wheel part 40a engages with the worm 38. The worm part 40b engages with the worm wheel 42. The worm wheel part 40a and the worm part 40b are formed as one piece and rotate concurrently.

The worm wheel 42 is made of resin and is formed by injection molding. The worm wheel 42 is an annular member, and the rod 26 is inserted in the worm wheel 42. The worm wheel 42 surrounds a part of the rod 26 in the axial direction. A front part 42a of the worm wheel 42 is surrounded by the cylindrical protrusion 34b of the first case part 34.

The longitudinal movement of the worm wheel 42 is restrained by the case 24. The longitudinal movement of the worm wheel 42 is restrained by the engagement of an engagement part 42d formed on the outer circumferential surface of the front part 42a of the worm wheel 42 with an engagement part 34h formed on the inner circumferential surface of the cylindrical protrusion 34b of the first case part 34. As shown in the figure, for example, the engagement part 42d of the worm wheel 42 may be a recessed part, and the engagement part 34h of the cylindrical protrusion 34b of the first case part 34 may be a protrusion that fits into the recessed part.

The worm wheel 42 has the female thread part 42e on its inner circumference. The female thread part 42e is threadably mounted on the male thread part 26g of the rod 26. The female thread part 42e is formed only in a part of the worm wheel 42 in the axial direction, although the embodiment is not limited thereto. This allows the female thread part 42e to be short in the axial direction. The inner diameter of a non-female thread part 42f is formed to be larger than the outer diameter of the rod 26 so as not to interfere with rod 26. For example, the inner diameter of the non-female thread part 42f has an inner diameter equal to or greater than the diameter of the root of the female thread part 42e.

The female thread part 42e may be formed only in a rear part 42b of the worm wheel 42. In this case, the female thread part 42e may be formed in the entirety of the rear part 42b as shown in the figure or it may be formed only in a part of the rear part 42b in the axial direction. Alternatively, the female thread part 42e may be formed only in the front part 42a. In this case, the female thread part 42e may be formed in the entirety of the front part 42a or formed only in a part of the front part 42a in the axial direction. Further, the female thread part 42e may be formed across the front part 42a and the rear part 42b. In this case, the female thread part 42e may be formed in the entirety of the front part 42a and in a part of the rear part 42b in the axial direction, or formed in a part of the front part 42a in the axial direction and in the entirety of the rear part 42b, or formed in a part of the front part 42a in the axial direction and in a part of the rear part 42b in the axial direction.

The board 30 is housed in the case 24 and held in the case 24. The board 30 is held at the right end of the case 24 with a mounting surface 30a facing leftward, although the embodiment is not particularly limited thereto. A motor drive circuit 46, including terminals, electronic components (not shown), and a potentiometer 44, is mounted on the mounting surface 30a. The terminals are connected to the terminals of the motor 28. The electronic components are, for example, ICs and surge absorbers. The motor 28 is electrically connected to the motor drive circuit 46 and is driven by the motor drive circuit 46.

When the motor 28 is driven to rotate the rotation axis 28a of the motor 28 and the worm wheel 42 rotates accordingly, the threaded engagement of the female thread part 42e of the worm wheel 42 and the male thread part 26g of the rod 26 changes, and the rod 26 moves along its axial direction in accordance with the direction of rotation and the amount of rotation.

A joint member 26k is connected to the base part 26c of the rod 26. The joint member 26k is engaged with a rod 44a of potentiometer 44. The position of the rod 44a changes with the movement of the rod 26 in the longitudinal direction. The motor drive circuit can recognize the position of the rod 26 based on the position of the rod 44a.

The advantage provided by the embodiment will now be described. A part of the male thread part 26g of the rod 26 in the axial direction is not surrounded by the worm wheel 42 so that the male thread part 26g is exposed from the worm wheel 42. In other words, the male thread part 26g of the rod 26 is formed to be relatively long in the axial direction. This realizes a long stroke of the rod 26, while also maintaining the length of the rod 26 and, ultimately, the dimension of the actuator 17 equivalent to those of the related art.

Further, the long stroke of the rod 26 is realized in the embodiment by forming the male thread part 26g of the rod 26 to be long in the axial direction. Therefore, there is no need to configure the female thread part 42e of the worm wheel 42 to be long for the purpose of a long stroke of the rod 26, and the female thread part 42e is formed to be relatively short in the axial direction. When forming the worm wheel 42, it is necessary to rotate and extract the female thread mold in the mold, but the short female thread part 42e can reduce the time required for extraction and shorten the molding cycle of the worm wheel 42.

While it is possible to realize the long stroke of the rod 26 by configuring the female thread part 42e of the worm wheel 42 and, ultimately, the worm wheel 42 itself to be long in the axial direction, but the rod 26 need also be configured to be long in the axial direction when the worm wheel 42 is configured to be long in the axial direction since the arms 26d_l, 26d_r need always be located outside the worm wheel 42, i.e., behind the worm wheel 42. Various disadvantages result when the rod 26 is configured to be long in the axial direction. When the rod 26 is long in the axial direction, for example, the material cost of the rod 26 will be higher. Further, it is necessary to form the rod 26 to be hollow to prevent sink marks. As the length of the rod 26 increases in the axial direction, however, the core for forming the rod 26 to be hollow naturally increases in length, increasing the size of the mold. Also, the time required to pull the core out will be longer and the molding cycle of the rod 26 will be longer if the core is long. In injection molding, a resin is injected into the mold at a high pressure, and the longer the core, the more likely it is that the core tilts under the pressure, which can deform the core. Therefore, it is desirable to realize the long stroke of the rod 26 by configuring the male thread part 26g of the rod 26 to be long in the axial direction.

Further, the long stroke of the rod 26 is achieved in the embodiment by forming the male thread part 26g of the rod 26 to be long in the axial direction, so that the front side of the male thread part 26g can protrude out of the case 24 from the opening 34c. This is addressed in the embodiment by the chamfered shape of the edges 34e, 34f of the restraining part 34d at the respective ends in the longitudinal direction. The chamfered shape of the edges 34e, 34f at the respective ends prevents the male thread part 26g of the rod 26 from getting caught by the restraining part 34d, allowing the rod 26 to be moved back and forth smoothly.

In further accordance with the embodiment, the edges 26s1, 26s2 of the ridge part 26s of the male thread part 26g at the respective ends in the longitudinal direction have a chamfered shape. The chamfered shape of the edges 26s1, 26s2 at the respective ends prevents the male thread part 26g of the rod 26 from getting caught by the restraining part 34d, allowing the rod 26 to be moved back and forth smoothly.

In further accordance with the embodiment, the arms 26d_l, 26d_r of the rod 26 engage with the engagement parts 36a_l, 36a_r of the second case part 36 over the entire range of the stroke of the rod 26 and do not engage or contact the first case part 34. In other words, switching of the member that the arms 26d_l, 26d_r engage does not take place anywhere over the entire range of the stroke of the arms 26d_l, 26d_r. Therefore, the rod 26 can be moved back and forth smoothly over the entire range of the stroke of the rod 26.

### (Second embodiment)

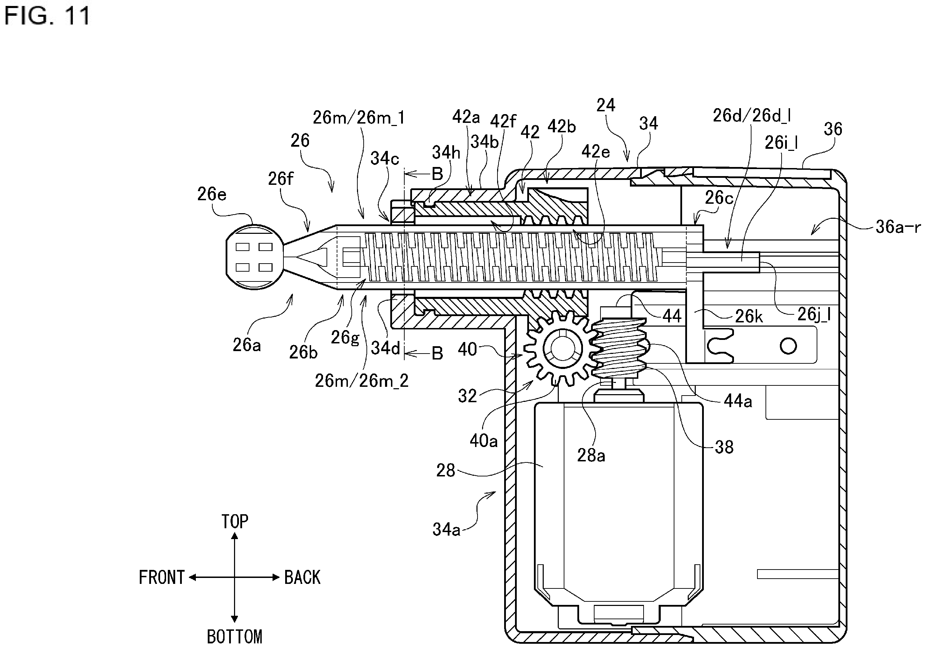

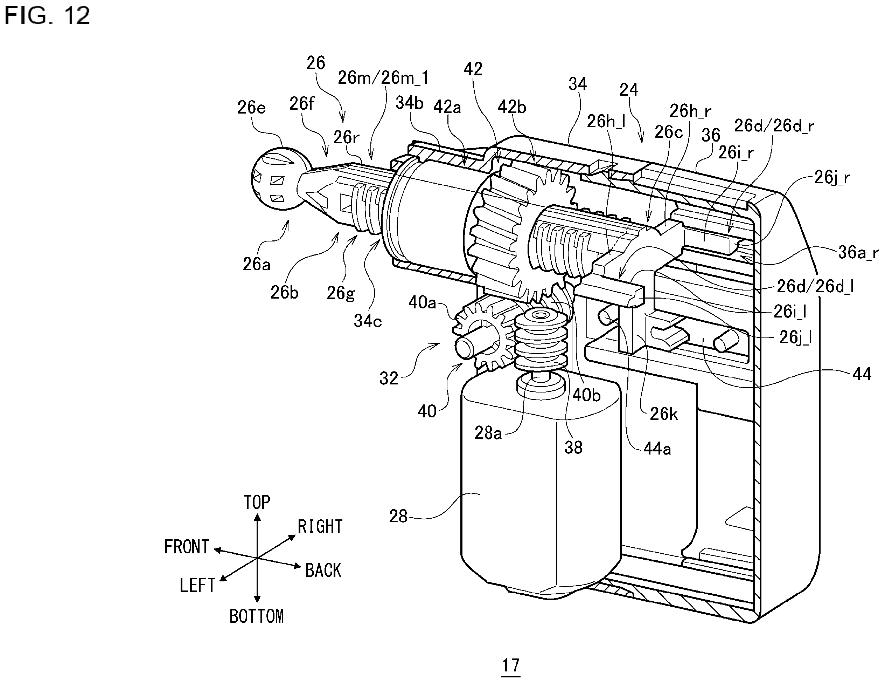

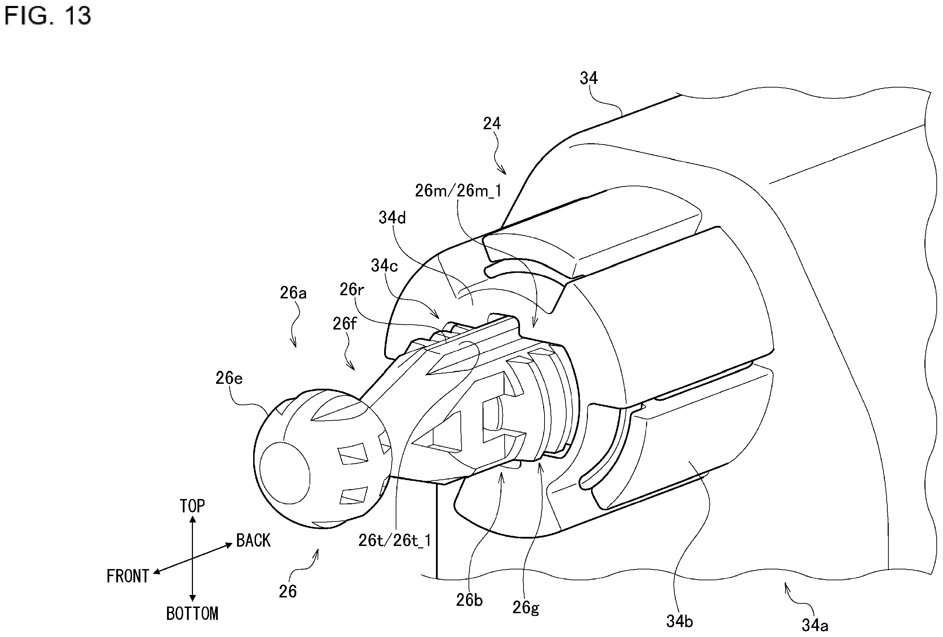

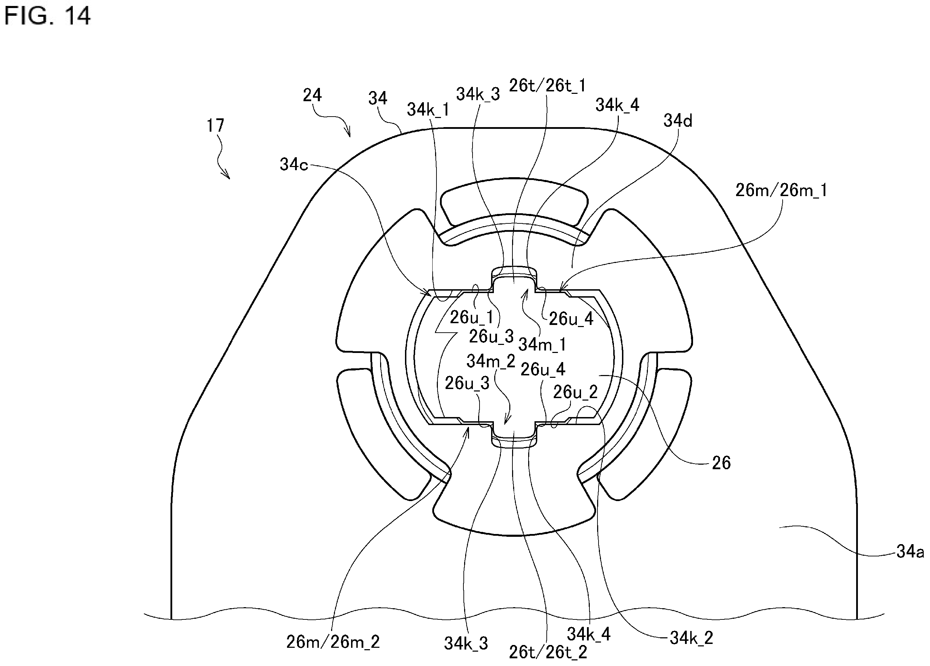

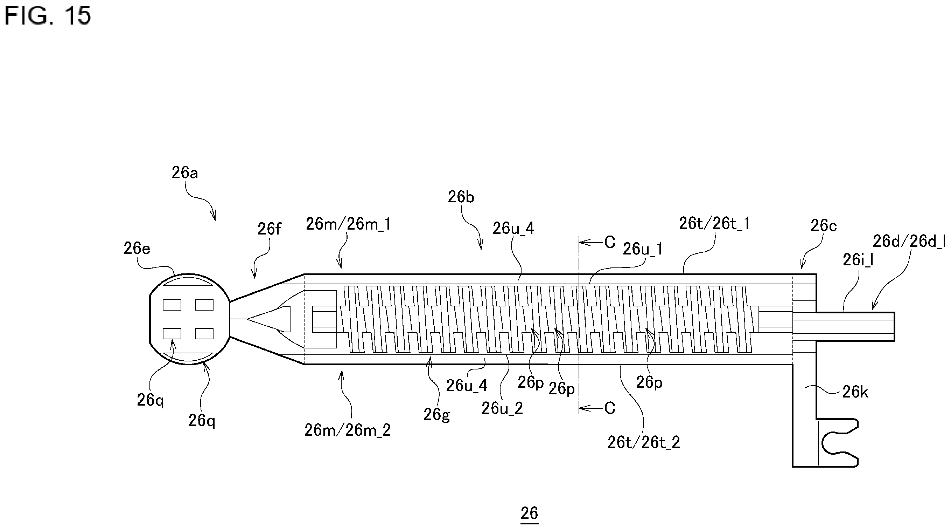

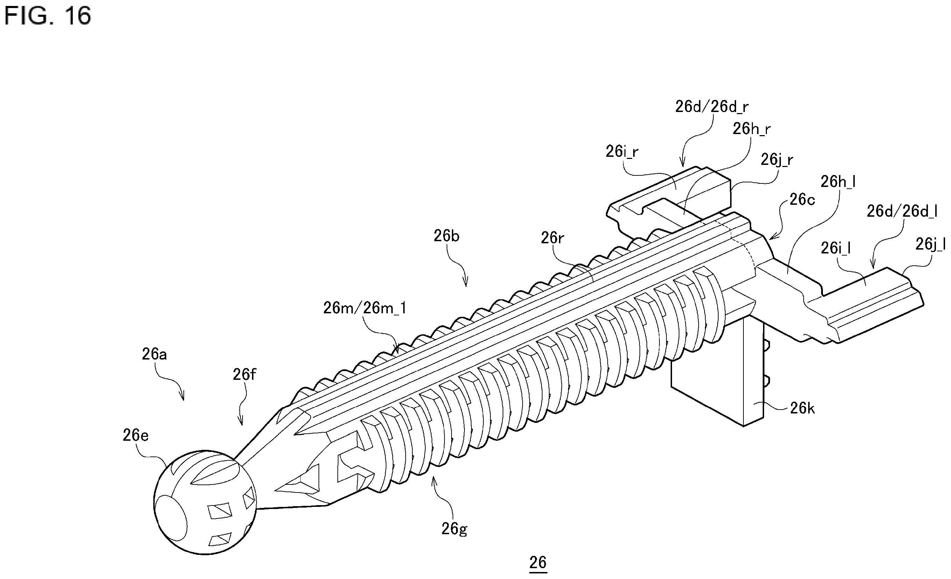

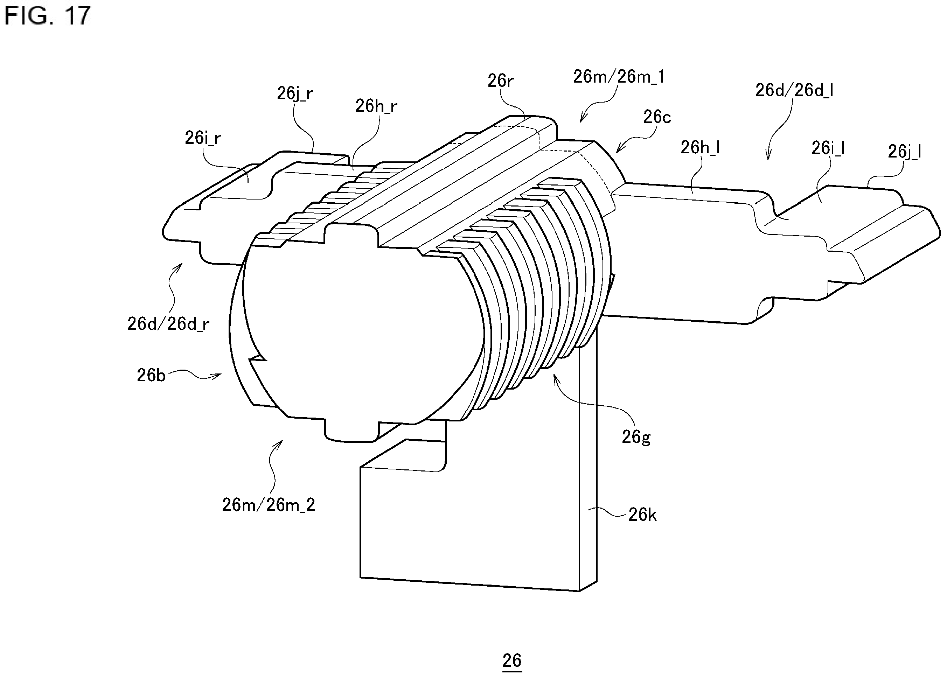

Reference is made to Figs. 11-17. Fig. 11 shows a cross-section of the case 24 and the worm wheel 42. Fig. 12 shows a cross-section of the case 24. Fig. 14 is a cross-sectional view of the actuator 17 through the B-B line of Fig. 11. Fig. 17 is a cross-sectional view of the rod 26 through the C-C line of Fig. 11. In Figs. 11, 12, illustration of the board 30 is omitted.

The actuator 17 is equipped with, as in the first embodiment, the case 24, the rod 26, the motor 28, the board 30, and the moving mechanism 32. The following description highlights the difference from the first embodiment.

The rod 26 is, as in the first embodiment, made of resin and is molded by injection molding. The rod 26 has a notch 26m that extends axially in a part of the circumferential direction. The rod 26 has two notches 26m in the illustrated example. The notch 26m can be regarded as a hollowed-out part. The number of notches 26m is not particularly limited to the extent that the function of the male thread part 26g is not impaired.

The rod 26 has a hollowed-out part 26p recessed from the root of the male thread part 26g in the radially inward direction. The hollowed-out part 26p is formed in all roots of the male thread part 26g in the illustrated example, although the embodiment is not particularly limited thereto. The spherical part 26e has at least one or, in the illustrated example, multiple hollowed-out parts 26q.

In any case, large-thickness portions of the rod 26 can be reduced or eliminated by forming a hollowed-out part in the rod 26 to the extent that the function of each part of the rod 26 is not impaired.

The notch 26m has a trace 26r of a parting line of the mold used in injection molding. The trace 26r of the parting line is, for example, a line corresponding to the parting line or a trace of its deletion. In this case, the male thread 26g near the parting line that could be an undercut can be reduced.

The notch 26m extends, preferably as illustrated, axially at least over the range in which the male thread part 26g is provided. Further, the rod 26 has, preferably as illustrated, the notches 26m at least in two locations that are radially opposite to each other. In these cases, the male thread part 26g of the rod 26 near the parting line that could be an undercut can be further reduced or eliminated.

The restraining part 34d has a first restraining surface 34k_1, a second restraining surface 34k_2, a third restraining surface 34k_3, and a fourth restraining surface 34k_4. The first restraining surface 34k_1 and the second restraining surface 34k_2 are both flat surfaces orthogonal to the first direction and are opposite to each other in the first direction across the rod 26. The first direction is a direction orthogonal to the axial direction of the rod 26. The third restraining surface 34k_3 and the fourth restraining surface 34k_4 are both flat surfaces orthogonal to the second direction and are opposite to each other in the second direction across a protrusion 26t of the rod 26 t. The second direction is a direction orthogonal to both the axial direction of the rod 26 and the first direction.

One notch 26m_1 of the two notches 26m has a first notch surface 26u_1, a third notch surface 26u_3, and a fourth notch surface 26u_4. The other notch 26m_2 of the two notches 26m has a second notch surface 26u_2, a third notch surface 26u_3, and a fourth notch surface 26u_4.

The first notch surface 26u_1 and the second notch surface 26u_2 are both flat surfaces orthogonal to the first direction. The first notch surface 26u_1 is opposite to the first restraining surface 34k_1 in the first direction. The second notch surface 26u_2 is opposite to the second restraining surface 34k_2 in the first direction. When the rod 26 is displaced in the first direction, the first notch surface 26u_1 comes into surface contact with the first restraining surface 34k_1, or the second notch face 26u_2 comes into surface contact with the second restraining surface 34k_2. In other words, the displacement of the rod 26 in the first direction is restrained by the surface contact of the first notch surface 26u_1 with the first restraining surface 34k_1 or the surface contact of the second notch face 26u_2 with the second restraining surface 34k_2. This suppresses a large slip of the rod 26 in the first direction.

The third notch surface 26u_3 and the fourth notch surface 26u_4 are flat surfaces orthogonal to the second direction. The third notch surface 26u_3 is opposite to the third restraining surface 34k_3 in the second direction. The fourth notch surface 26u_4 is opposite to the fourth restraining surface 34k_4 in the second direction. When the rod 26 is displaced in the second direction, the third notch surface 26u_3 comes into surface contact with the third restraining surface 34k_3, or the fourth notch face 26u_4 comes into surface contact with the fourth restraining surface 34k_4. In other words, the displacement of the rod 26 in the second direction is restrained by the surface contact of the third notch surface 26u_3 with the third restraining surface 34k_3 or the surface contact of the fourth notch face 26u_4 with the fourth restraining surface 34k_4. This suppresses a large slip of the rod 26 in the second direction.

In the illustrated example, the first direction is the vertical direction, and the second direction is the horizontal direction, although the embodiment is not particularly limited thereto. In other words, in the illustrated example, the first restraining surface 34k_1 and the second restraining surface 34k_2 are both surfaces orthogonal in the vertical direction and are opposite to each other in the vertical direction across the rod 26. The third restraining surface 34k_3 and the fourth restraining surface 34k_4 are both surfaces orthogonal in the horizontal direction and are opposite to each other in the horizontal direction across the protrusion 26t of the rod 26. Further, the first restraining surface 34k_1, the second restraining surface 34k_2, the third restraining surface 34k_3, and the fourth restraining surface 34k_4 are surfaces orienting downward, upward, rightward, and leftward, respectively.

In the illustrated example, the restraining part has a first recessed part 34m_1 recessed upward from the first restraining surface 34k_1 and a second recessed part 34m_2 recessed downward from the second restraining surface 34k_2. The left and right inner wall surfaces of the first and second recessed parts 34m_1, 34m_2 constitute the third and fourth restraining surfaces 34k_3, 34k_4, respectively. In the illustrated example, the notch 26m_1 has a first protrusion 26t_1 protruding upward from the first notch surface 26u_1, and the notch 26m_2 has a second protrusion 26t_2 protruding downward from the second notch surface 26u_2. The left and right side surfaces of the first and second protrusions 26t_1, 26t_2 constitute the third and fourth notch surfaces 26u_3, 26u_4, respectively.

Further, in the illustrated example, the protrusion 26t_1 is housed in the first recessed part 34m_1, and the third and fourth notch surfaces 26u_3, 26u_4 of the first protrusion 26t_1 are opposite to the third and fourth restraining surfaces 34k_3, 34k_4 of the first recessed part 34m_1 in the second direction. The second protrusion 26t_2 is housed in the second recessed part 34m_2, and the third and fourth notch surfaces 26u_3, 26u_4 of the second protrusion 26t_2 are opposite to the third and fourth restraining surfaces 34k_3, 34k_4 of the second recessed part 34m_2 in the second direction.

The embodiment described above provides the same advantage as that of the first embodiment.

In further accordance with the embodiment, a hollowed-out part is formed in the rod 26 so that large-thickness portions of the rod 26 can be reduced or eliminated. This makes it easier to mold the rod 26 as it is not necessary to form the rod 26 to be hollow to prevent sink marks. Further, since there is no need for a core for forming the rod 26 to be hollow, the mold for forming the rod 26 can be miniaturized or simplified.

In further accordance with the embodiment, the rod 26 has the notch 26m that extends axially in a part of the circumferential direction. This reduces the male thread part 26g near the parting line that could be an undercut.

In further accordance with the embodiment, the notch 26m preferably extends axially at least over the area in which the male thread part 26g is provided. Further, the rod 26 preferably has notches 26m at least in two locations radially opposite to each other. In these cases, the male thread part 26g of the rod 26 near the parting line that could be an undercut can be further reduced or eliminated.

When the displacement of the rod 26 is restrained by causing the male thread part 26g of the rod 26 to be in contact with the restraining part 34d, it is necessary to manage whether the inner circumferential surface of the restraining part 34d in contact with the rod 26 is perfectly circular, making it difficult to manage the dimension of the rod 26 and restraining part 34d. According to the embodiment, the displacement of the rod 26 in the vertical direction and the horizontal direction, i.e., the radial displacement of the rod 26, is restrained by causing the notch 26m of the rod 26 to be in contact with the restraining part 34d. In particular, the radial displacement of the rod 26 is restrained by surface contact between the notch surface and the restraining surface, which are both flat surfaces. In this case, management is relatively easy because it is only necessary to manage whether the notch surface and the restraining surface corresponding to the notch surface are parallel. Also, manufacturing thereof will also be relatively easy. Further, the male thread part 26g of the rod 26 does not get caught by the restraining part 34d so that the rod 26 can be moved back and forth smoothly.

The present invention has been described above based on the embodiments. The embodiments are intended to be illustrative only and it will be understood by those skilled in the art that various modifications to combinations of constituting elements and processes are possible and that such modifications are also within the scope of the present invention. A description will now be given of variations.

Any combination of the embodiment and the variation described above will also be useful as an embodiment of the present disclosure. New embodiments created by the combination provide the advantages of embodiment and the variation combined. It will also be understood by skilled persons that the functions that the constituting elements recited in the claims should achieve are implemented either alone or in combination by the constituting elements shown in the embodiment and the variation.

Generalizing the embodiments described above, we obtain the following aspects.

[Aspect 1]
   An actuator including:
   a case having an opening;
   a rod housed in the case, a tip of the rod protruding out of the case from the opening;
   a motor housed in the case; and
   a moving mechanism housed in the case and driven by the motor to move the rod in an axial direction of the rod,
   wherein the moving mechanism includes an annular member through which the rod is inserted,
   wherein movement of the annular member in the axial direction is restrained,
   wherein the rod has a male thread part on an outer circumference, the annular member has a female thread part threadably mounted on the male thread part on an inner circumference, and the rod moves in the axial direction according to rotation of the annular member,
   wherein the case has a restraining part more toward the tip than the annular member in the axial direction, and
   wherein the rod has a notch extending in the axial direction in a part of a circumferential direction, and radial displacement of the rod is restrained by contact of the notch with the restraining part.
[Aspect 2]
   The actuator according to Aspect 1,
   wherein the displacement of the rod is restrained by surface contact of the notch with the restraining part.
[Aspect 3]
   The actuator according to Aspect 1 or 2,
   wherein the notch has a protrusion extending in the axial direction,
   wherein the restraining part has a recessed part corresponding to the protrusion, and
   wherein the radial displacement of the rod is restrained by contact of the protrusion with the recessed part.
[Aspect 4]
   The actuator according to any one of Aspects 1 through 3,
   wherein the rod has a rotatably gripped spherical part at the tip, and
   wherein the spherical part has a hollowed-out part.
[Aspect 5]
   An actuator including:
   a case having an opening;
   a rod housed in the case, a tip of the rod protruding out of the case from the opening;
   a motor housed in the case; and
   a moving mechanism housed in the case and driven by the motor to move the rod in an axial direction of the rod,
   wherein the moving mechanism includes an annular member through which the rod is inserted,
   wherein movement of the annular member in the axial direction is restrained,
   wherein the rod has a male thread part on an outer circumference, the annular member has a female thread part threadably mounted on the male thread part on an inner circumference, and the rod moves in the axial direction according to rotation of the annular member, and wherein a part of the male thread part is exposed from the annular member.
[Aspect 6]
   The actuator according to Aspect 5,
   wherein the male thread part is longer than the female thread part in the axial direction.
[Aspect 7]
   The actuator according to Aspect 5 or 6,
   wherein the case has a restraining part more toward the tip than the annular member,
   wherein radial displacement of the rod is restrained by contact with the restraining part, and
   wherein edges of the restraining part on respective ends in the axial direction have a chamfered shape.
[Aspect 8]
   The actuator according to any one of Aspects 5 through 7,
   wherein the case has a box shape and includes a first case part and a second case part connected to each other in the axial direction,
   wherein the first case has the opening, and
   wherein the rod has an arm extending in a direction away from the tip in the axial direction, and rotation of the rod is restrained by engagement of the arm with an engagement part of the second case part over an entire range of a stroke of the rod.
[Aspect 9]
   An actuator including:
   a case having an opening;
   a rod housed in the case, a tip of the rod protruding out of the case from the opening;
   a motor housed in the case; and
   a moving mechanism housed in the case and driven by the motor to move the rod in an axial direction of the rod,
   wherein the moving mechanism includes an annular member through which the rod is inserted,
   wherein movement of the annular member in the axial direction is restrained,
   wherein the rod has a male thread part on an outer circumference, the annular member has a female thread part threadably mounted on the male thread part on an inner circumference, and the rod moves in the axial direction according to rotation of the annular member, and wherein the rod is made of resin and has a notch extending in the axial direction in a part of the circumferential direction.
[Aspect 10]
   The actuator according to Aspect 9,
   wherein the notch extends in the axial direction at least over a range in which the male thread part is provided.
[Aspect 11]
   The actuator according to Aspect 9 or 10,
   wherein the rod has the notch at least in two locations opposite to each other in a radial direction.
[Aspect 12]
   The actuator according to any one of Aspects 9 through 11,
   wherein the notch has a trace of a parting line of a mold used in injection molding.
[Aspect 13]
   The actuator according to any one of Aspects 9 through 12,
   where the rod has a rotatably gripped spherical part at the tip, and
   wherein the spherical part has a hollowed-out part.

### INDUSTRIAL APPLICABILITY

The present invention can be used in actuators.

### REFERENCE SIGNS LIST

1 vehicle lamp, 17 actuator, 24 case, 26 rod, 26d arm, 26e spherical part, 26g male thread part, 26m notch, 26t protrusion, 28 motor, 32 moving mechanism, 34 first case part, 34c opening, 34d restraining part, 34m_1 first recessed part, 34m_2 second recessed part, 36 second case part, 36a_l, 36a_r engagement part, 42 worm wheel, 42e female thread part

## Claims

1. An actuator comprising:
a case having an opening;
a rod housed in the case, a tip of the rod protruding out of the case from the opening;
a motor housed in the case; and
a moving mechanism housed in the case and driven by the motor to move the rod in an axial direction of the rod,
wherein the moving mechanism includes an annular member through which the rod is inserted,
wherein movement of the annular member in the axial direction is restrained,
wherein the rod has a male thread part on an outer circumference, the annular member has a female thread part threadably mounted on the male thread part on an inner circumference, and the rod moves in the axial direction according to rotation of the annular member,
wherein the case has a restraining part more toward the tip than the annular member in the axial direction, and
wherein the rod has a notch extending in the axial direction in a part of a circumferential direction, and radial displacement of the rod is restrained by contact of the notch with the restraining part.

2. The actuator according to claim 1,
wherein the displacement of the rod is restrained by surface contact of the notch with the restraining part.

3. The actuator according to claim 1,
wherein the notch has a protrusion extending in the axial direction,
wherein the restraining part has a recessed part corresponding to the protrusion, and
wherein the radial displacement of the rod is restrained by contact of the protrusion with the recessed part.

4. The actuator according to claim 1,
wherein the rod has a rotatably gripped spherical part at the tip, and
wherein the spherical part has a hollowed-out part.

5. An actuator comprising:
a case having an opening;
a rod housed in the case, a tip of the rod protruding out of the case from the opening;
a motor housed in the case; and
a moving mechanism housed in the case and driven by the motor to move the rod in an axial direction of the rod,
wherein the moving mechanism includes an annular member through which the rod is inserted,
wherein movement of the annular member in the axial direction is restrained,
wherein the rod has a male thread part on an outer circumference, the annular member has a female thread part threadably mounted on the male thread part on an inner circumference, and the rod moves in the axial direction according to rotation of the annular member, and
wherein a part of the male thread part is exposed from the annular member.

6. The actuator according to claim 5,
wherein the male thread part is longer than the female thread part in the axial direction.

7. The actuator according to claim 5,
wherein the case has a restraining part more toward the tip than the annular member,
wherein radial displacement of the rod is restrained by contact with the restraining part, and
wherein edges of the restraining part on respective ends in the axial direction have a chamfered shape.

8. The actuator according to claim 5,
wherein the case has a box shape and includes a first case part and a second case part connected to each other in the axial direction,
wherein the first case has the opening, and
wherein the rod has an arm extending in a direction away from the tip in the axial direction, and rotation of the rod is restrained by engagement of the arm with an engagement part of the second case part over an entire range of a stroke of the rod.

9. An actuator comprising:
a case having an opening;
a rod housed in the case, a tip of the rod protruding out of the case from the opening;
a motor housed in the case; and
a moving mechanism housed in the case and driven by the motor to move the rod in an axial direction of the rod,
wherein the moving mechanism includes an annular member through which the rod is inserted,
wherein movement of the annular member in the axial direction is restrained,
wherein the rod has a male thread part on an outer circumference, the annular member has a female thread part threadably mounted on the male thread part on an inner circumference, and the rod moves in the axial direction according to rotation of the annular member, and
wherein the rod is made of resin and has a notch extending in the axial direction in a part of the circumferential direction.

10. The actuator according to claim 9,
wherein the notch extends in the axial direction at least over a range in which the male thread part is provided.

11. The actuator according to claim 9,
wherein the rod has the notch at least in two locations opposite to each other in a radial direction.

12. The actuator according to claim 9,
wherein the notch has a trace of a parting line of a mold used in injection molding.

13. The actuator according to claim 9,
where the rod has a rotatably gripped spherical part at the tip, and
wherein the spherical part has a hollowed-out part.
